Europäisches Patentamt

European Patent Office

Office européen des brevets

(19)

(11) Veröffentlichungsnummer: **0 090 142**
**B2**

(12) **NEUE EUROPÄISCHE PATENTSCHRIFT**

(45) Veröffentlichungstag der neuen Patentschrift:
05.12.90

(21) Anmeldenummer: **83100847.9**

(22) Anmeldetag: **29.01.83**

(51) Int. Cl.[5]: **C 08 F 14/06, C 08 F 2/24**

(54) Verfahren zur Herstellung von verpastbaren Polymeren des Vinylchlorids.

(30) Priorität: 25.03.82 DE 3210891

(43) Veröffentlichungstag der Anmeldung:
05.10.83 Patentblatt 83/40

(45) Bekanntmachung des Hinweises auf die
Patenterteilung:
26.02.86 Patenblatt 86/09

(45) Bekanntmachung des Hinweises auf die
Entscheidung über den Einspruch:
05.12.90 Patentblatt 90/49

(84) Benannte Vertragsstaaten:
BE CH DE FR GB IT LI SE

(56) Entgegenhaltungen:
BE-A- 799 025      FR-A-1 044 755
BE-A- 817 680      JP-A-54 060 388
DE-A-2 015 391     SU-A- 939 454
DE-A-2 850 105     US-A-4 150 210
DE-B-1 119 513     ZA-A- 675 132
DE-C-2 629 613

Die Akte enthält technische Angaben, die nach
dem Eingang der Anmeldung eingereicht
wurden und die nicht in dieser Patentschrift
enthalten sind.

(73) Patentinhaber: HÜLS AKTIENGESELLSCHAFT
Patentabteilung / PB 15 - Postfach 13 20
D-4370 Marl 1 (DE)

(72) Erfinder: Boeke, Burkhard, Dr.
Im Hundel 34
D-4358 Haltern 6 (DE)
Erfinder: Kalka, Josef, Dr.
Rohrkamp 6
D-4352 Herten (DE)

(56) Entgegenhaltungen:
CHEMICAL ABSTRACTS, Band 82, Nr. 14, 7.
April 1975, Seite 31, Nr. 87046j, Columbus, Ohio,
USA
Ullmann, 4 Auflage Bd. 10455 und Bd. 22463

EP 0 090 142 B2

Courier Press, Leamington Spa, England.

**Beschreibung**

Gegenstand der Erfindung ist ein Verfahren zur Herstellung von Vinylchloridpolymerisaten durch diskontinuierliche Polymerisation in wäßriger Dispersion in Gegenwart von wasserlöslichen Katalysatoren und von Emulgatoren sowie Polymerisationshilfsmitteln.

Die nach dem erfindungsgemäßen Verfahren erhaltenen Polymerisate sind besonders geeignet zur Herstellung von Plastisolen mit einer sehr niedrigen Viskosität. Die Fließeigenschaften dieser Plastisole zeichnen sich durch eine niedrige Viskosität aus, nicht nur im niedrigen, sondern auch im hohen Scherbereich. Dieser Effekt ist besonders erwünscht bei der Verarbeitung der Plastisole nach dem Streichverfahren. Eine niedrige Pastenviskosität im unteren Scherbereich erleichtert die Handhabung der Pasten, wie z.B. das Fördern und die Siebbarkeit sowie die Selbstentlüftung bei der Verarbeitung. Eine niedrige Pastenviskosität im hohen Scherbereich ermöglicht eine hohe Verarbeitungsgeschwindigkeit. Weiterhin lassen sich die erfindungsgemäß hergestellten Polymerisate mit Vorteil zur Herstellung von Weich-Schaumstoffen mit Hilfe chemischer Treibmittel verwenden. Die dabei erhaltenen Produkte ergeben auch bei kurzer Verweilzeit im Gelierkanal Schaumstoffe mit guten bis sehr guten Schaumeigenschaften.

Es ist bereits bekannt, Polyvinylchlorid, welches für die Pastenherstellung geeignet ist, nach dem kontinuierlichen oder diskontinuierlichen Verfahren herzustellen.

Das kontinuierliche Verfahren führt zu einem Pasten-PVC mit erwünscht niedriger Viskosität im hohen Scherbereich, jedoch mit hoher Viskosität bei niedrigen Schergeschwindigkeiten. Außerdem enthält ein derartiges Polyvinylchlorid einen relativ hohen Anteil an Emulgatoren. Eine hohe Emulgatorkonzentration wirkt sich aber in den Endprodukten und bei der Verarbeitung nachteilig aus. Sie verschlechtert die Transparenz und erhöht die Wasserempfindlichkeit der Polymerisate und der daraus hergestellten Artikel.

Beim diskontinuierlichen Verfahren sind im Prinzip zwei Verfahrensvarianten bekannt. Nach dem sogenannten Mikrosuspensionsverfahren erhält man Latices mit einem relativ geringen Feststoffgehalt von ca. 40 Gewichtsprozent. Die Sprühtrocknung dieser Latices führt daher zu erhöhten Trocknungskosten. Die Durchführung des Verfahrens ist außerdem mit einem erheblichen Aufwand verbunden. Das Verfahren erfordert nämlich einen der Polymerisation vorgeschalteten Verfahrensschritt, und zwar eine Vorhomogenisierung von Wasser, Vinylchlorid, Emulgatoren sowie monomerlöslichen Katalysatoren mittels Homogenisatoren. Die sprühgetrockneten Produkte führen zu Pasten mit ausgeprägtem dilatanten Fließverhalten. Sie sind somit für die Anwendung des Streichverfahrens wenig geeignet.

Aus FR—A—2 086 635 ist ein zweistufiges Mikrosuspensionsverfahren bekannt, welches die Herstellung von PVC-Latices mit hohen Feststoffkonzentrationen beschreibt. Die Durchführung dieses Verfahrens verlangt jedoch neben dem Verfahrensschritt der Vorhomogenisierung die Herstellung eines Saatlatex und ist daher mit zu großem Aufwand verbunden.

Durch die diskontinuierliche Ausführung der Emulsionspolymerisation von Vinylchlorid erhält man Polymerisate mit niedrigen Emulgatorgehalten. Um bei der Polymerisation mit geringen Emulgatormengen stabile Latices und Pasten-Polyvinylchlorid mit niedriger Pastenviskosität zu erhalten, wurde vorgeschlagen, die sogenannte Saatlatex-Methode anzuwenden. Die Methode besteht darin, daß man bei der Emulsionspolymerisation einen Saatlatex (Keim-Latex bzw. Primär-Dispersion) vorlegt. Diese Verfahrensweise ist jedoch im großtechnischen Verfahren sehr aufwendig, da die Primär-Dispersion extra hergestellt, gelagert und dosiert werden muß. Zudem ist die erreichbare Stabilität der so hergestellten Latices nicht optimal und die Viskositäten der nach diesem Verfahren gewonnenen Polyvinylchlorid-Pasten liegen noch deutlich oberhalb der Pasten-Viskositäten, wie sie nach dem kontinuierlichen Verfahren gewonnen werden.

Nach den Verfahren der DE—C—19 64 029 und der ausgelegten Unterlagen von BE—A—656 985 wird der Emulgator während des Polymerisationsvorganges nach bestimmtem Programm zugefügt. Durch diese Verfahrensweisen ist es möglich, Polyvinylchlorid mit besonders geringen Emulgatorgehalten herzustellen.

Auch die nach diesen Verfahren erhaltenen Polyvinylchlorid-Pasten besitzen aber noch eine wesentlich höhere Viskosität als die, welche nach dem kontinuierlichen Verfahren erhalten werden (s. hierzu Vergleichsbeispiel D). Es stellt sich daher die Aufgabe, ein Verfahren zu finden, welches die Vorteile der kontinuierlichen mit den Vorteilen der diskontinuierlichen Verfahrensweise verbindet, d. h. ein Verfahren, welches ein Polyvinylchlorid liefert, das geringste Emulgatorgehalte zeigt und gleichzeitig zu Pasten mit niedrigen Viskositäten im niedrigen und hohen Scherbereich führt.

Es sind diskontinuierliche Verfahren bekannt, die unter Verwendung von Dispergierhilfen (Fettalkoholen) durchgeführt werden. Wir nennen diesbezüglich zum Stand der Technik:

1. DE—A—22 60 957
2. DE—B—26 29 655
3. DE—A—28 50 105
4. DE—A—27 42 178
5. JP—A—54060388

Die Polymerisation nach den Verfahren 1., 2. und 3., wird mittels öllöslicher Aktivatoren, teilweise unter Zusatz von reduzierenden Mitteln, durchgeführt. Diese Verfahren führen zu Produkten, welche, zu Plastisolen verarbeitet, eine stark dilatante Fließcharakteristik aufweisen, wie aus Vergleichsversuch A hervorgeht.

Das in 4. beschriebene Verfahren verwendet zur Aktivierung anorganische Katalysatoren, Nach 4. wird ein vorgerührtes Gemisch, bestehend aus einem $C_{16}$—$C_{20}$ Alkylalkohol und einem Alkylsulfat ($C_{12}$—$C_{18}$), in die Polymerisation eingesetzt. Wie die Vergleichsversuche B und C zeigen, erhält man nach 4, entweder instabile Latices oder feststoffarme Latices, die nach Sprühtrocknung ein Polyvinylchlorid liefern, das hochviskose Pasten mit einem ausgeprägten pseudoplastischen Fließvermögen ergibt. Gemäß der Verfahrensweise von 5. wird zwar eine Emulsionspolymerisation durchgeführt, jedoch wird keine Prädispersion aus Tensid und langkettigem Alkohol hergestellt. Die so dargestellten Produkte zeichnen sich durch eine enge Teilchengrößenverteilung aus, führen aber zu hochviskosen Pasten.

Diese Nachteile des Standes der Technik werden überwunden durch ein Verfahren zur Herstellung von verpastbaren Polymeren des Vinylchlorids, wie es in den Patentansprüchen beschrieben wird. Das erfindungsgemäße Verfahren ermöglicht die Herstellng von Latices mit einem Feststoffgehalt von bis zu 50 Gewichtsprozent ohne nennenswerte Bildung von unerwünschtem Koagulat. Die Pastenviskosität des nach dem erfindungsgemäßen Verfahren gewonnenen PVC ist niedrigviskos und weist ein nahezu newton'isches Fließverhalten auf. Die erfindungsgemäß hergestellten Polymerisate lassen sich außerdem mit Vorteil zur Herstellung von Weich-Schaumstoffen nach dem Streichverfahren mit Hilfe chemischer Treibmittel verwenden.

Das erfindungsgemäß verwendbare Emulgatorsystem besteht aus

a) Alkalimetall- oder Ammoniumsalzen von Alkylsulfonsäuren oder Alkylarylsulfonsäuren oder Sulfobernsteinsäureestern in Mengen von 0,2 bis 3 Gewichtsprozent, vorzugsweise 0,5 bis 1,5 Gewichtsprozent bezogen auf das Monomere,

b) einem geradkettigen oder auch verzweigten $C_{14}$—$C_{20}$-Alkylalkohol oder einem Gemisch mehrerer solcher Alkohole in Mengen von 50 bis 200 Gewichtsprozent, vorzugsweise 70 bis 150 Gewichtsprozent, bezogen auf das eingesetzte Tensid.

Als Alkali- oder Ammoniumsalz von Alkylsulfonsäuren, die als Emulgatorkomponente eingesetzt werden, kommen solche infrage, deren Alkylreste 10 bis 20 Kohlenstoffatome, vorzugsweise 14 bis 17 Kohlenstoffatome, enthalten und verzweigt oder unverzweigt sind. Es kommen beispielsweise zur Anwendung: Natrium-decylsulfonat, Natrium-dodecylsulfonat, Natrium-myristylsulfonat, Natriumpalmitylsulfonat, Natriumstearylsulfonat, Natrium-heptadecylsulfonat, Natrium-arachylsulfonat. Auch die Kalium- oder Ammoniumsalze sind mit analogem Erfolg einsetzbar. I. ä. wird man aber Gemische der genannten Individuen bevorzugen, wie diese bei der Sulfonierung von technischen Alkangemischen anfallen.

Als Alkali- und Ammoniumsalz von Alkylarylsulfonsäuren, die als Emulgatorkomponente verwendet werden sollen, lassen sich solche heranziehen, deren Alkylkette 8 bis 18 Kohlenstoffaome, vorzugsweise 10 bis 13 Kohlenstoffatome, enthält und verzweigt oder unverzweigt ist. Als Beispiele seien genannt: Natriumtetrapropylenbenzolsulfonat, Natrium-p-n-dodecylbenzolsulfonat, Natrium-octadecylbenzolsulfonat, Natriumoctylbenzolsulfonat, Natrium-decylbenzolsulfonat, Natriumtridecylbenzolsulfonat, Natriumtetradecylbenzolsulfonat, Natrium-pentadecylbenzolsulfonat, Natrium-hexadecylbenzolsulfonat. Bevorzugt werden Gemische solcher Individuen eingesetzt. Es lassen sich gleichfalls auch die Kalium- oder Ammoniumsalze einsetzen.

Als Alkali- und Ammoniumsalze von Sulfobernsteinsäureester, die als Emulgatorkomponenten Verwendung finden sollen, lassen sich solche einsetzen, deren Alkoholteil 6 bis 14 Kohlenstoffatome, vorzugstweise 8 bis 10 Kohlenstoffatome, enthält und verzweigt oder unverzweigt ist. Es kommen beispielsweise infrage: Natrium-dihexylsulfosuccinat, Natriumdioctylsulfosuccinat, Natrium-di-2-ethylhexylsulfosuccinat, Natrium-didecylsulfosuccinat, Natrium-didodecylsulfosuccinat, Natrium-diisodecylsulfosuccinat, Natrium-diisododecylsulfosuccinat, Natrium-tridecylsulfosuccinat, Natrium-ditetradecylsulfosuccinat und die entsprechenden Kalium- und Ammoniumsalze. Es lassen sich auch Gemische der genannten Emulgatoren verwenden.

Als Dispergierhilfen können geradkettige oder verzweigte $C_{14}$—$C_{20}$-Alkohole eingesetzt werden, wie beispielsweise Myristylalkohol, Palmitylalkohol, Stearylalkohol, Arachylalkohol, 2- Hexadecanol, 2-Octyldodecanol. Es lassen sich auch Gemische der genannten Alkohole verwenden.

Die Komponenten a) und b) des Emulgatorsystems werden zweckmäßigerweise außerhalb des Reaktors in Wasser gelöst bzw. dispergiert. Da die Schmelzpunkte der Fettalkohole oberhalb der Raumtemperatur liegen, wird der Löse- und Dispergiervorgang vorteilhaft bei Temperaturen von 30 bis 80°C, d. h. oberhalb der Schmelztemperatur der Fettalkohole, durchgeführt. Der Löse- und Dispergervorgang kann in üblichen Rührbehältern ausgeführt werden. Besondere Anforderungen an Rührintensität und Rührdauer werden nicht gestellt.

Nach dem erfindungsgemäßen Verfahren wird ein Polyvinylchlorid-Latex mit Feststoffgehalten bis zu 50 Gewichtsprozent erhalten, wenn die Emulgatormischung kontinuierlich bzw. absatzweise während der Polymerisationsperiode zugegeben wird. Bis zu einem Umsatz von 50% sollten nicht mehr als die Hälfte der insgesamt notwendigen Emulgatormenge absatzweise bzw. kontinuierlich zugegeben werden. Die Emulgatorzugabe kann beispielsweise nach den ausgelegten Unterlagen von BE—A—656 985 erfolgen. Besonders vorteilhaft ist es in Bezug auf die Pastenviskosität des Endproduktes, wenn die Emulgatorzugabe in der Weise erfolgt, daß wähend der Polymerisation die Oberflächenspannung der Polymerisatdispersion gemäß DE—A—30 49 008 in engen Grenzen gehalten wird. Eine sehr zweckmäßige Art der Emulgatorzugabe ist auch diejenige, wie sie in DE—C 19 64 029 bechrieben ist.

Nach dem erfindungsgemäßen Verfahren kann das Monomere entweder insgesamt vorgelegt oder kontinuierlich bzw. absatzweise zugegeben werden. Es muß selbstverständlich immer soviel Vinylchlorid vorhanden sein, daß der notwendige Umsatz gewährleistet ist.

Als Comonomere lassen sich z.B. einsetzen: Vinylacetat, Vinylidenchlorid, Vinylether, Acrylnitril und Acrylsäureester. Das Comonomere kann im Copolymerisat bis zu 30, vorzugsweise zwischen 1 und 20 Gewichtsprozent, anwesend sein.

Das Wasser kann ebenfalls vorgelegt oder kontinuierlich zugegeben werden. Im allgemeinen ist es zweckmäßig, wenigstens 25 Gewichtsprozent des Wassers vorzulegen und den anderen Teil mit dem Emulgatorsystem bzw. mit dem Aktivator zuzugeben.

Das Verhältnis Monomere zu Wasser kann bis zu sehr honen Vinylchloridkonzentrationen beliebig sein (ca. 1:0,6 bis 1:1,6). Im allgemeinen wird man bestrebt sein, so zu polymerisieren, daß man Latices mit einem möglichst hohen Feststoffgehalt erhält.

Der Endumsatz soll natürlich möglichst hoch sein.

Als Katalysatoren lassen sich die üblichen wasserlöslichen Perverbindungen einsetzen, wie $H_2O_2$, Kaliumpersulfat sowie die Redoxsysteme, wie sie z. E. in Kainer, Polyvinylchlorid und Vinylchlorid-Mischpolymerisate, Springer-Verlag, 1965 Seite 46 ff., angegeben sind.

Die Polymerisationstemperatur kann — je nach gewünschtem Molekulargewicht — 40 bis 70°C betragen.

Die Polymerisationsdauer ist — wie stets — von der Polymerisationstemperatur und der Katalysatorkonzentration abhängig, Sie kann etwa 4 bis 16 Stunden betragen.

Es wird zweckmäßigerweise mit üblichen Umfangsgeschwindigkeiten und mit den bei Emulsionspolymerisationsverfahren üblicherweise eingesetzten Blattrührern gerührt.

Das erfindungsgemäße Verfahren wird anhand der nachstehenden Beispiele erläutert:

### Beispiel 1

In einem 50—1-Behälter werden 17 g 60°C-warmes Wasser vorgelegt. Unter Rühren werden 8,6 kg einer 21 %igen wäßrigen Natriumalkylbenzolsulfonatlösung (Gemisch von $C_{10}$—$C_{13}$-Alkylbenzolsulfonaten) sowie 1,8 kg eines Gemisches aus etwa gleichen Teilen von Cetyl- und von Stearylalkohol zugegeben.

In einem Rührautoklaven von 500 l Inhalt, der mit Heiz und Kühleinrichtungen versehen ist, werden unter Ausschluß von Luft-Sauerstoff 120 l entsalztes Wasser, 0,2 l der zuvor bereiteten Emulgatorlösung, 260 g Mononatriumphosphat vorgelegt. Die Mischung wird auf 52°C erwärmt. Hierzu werden 45 kg Vinylchlorid gegeben. Durch Zudosieren einer 0,5%igen wäßrigen $H_2O_2$- und einer 0,2 %igen wäßrigen Ascorbinsäurelösung zu jeweils gleichen Teilen wird die Reaktion gestartet.

Die Aktivatordosierung wird so eingestellt, daß bei nahezu voller Kühlkapazität die Polymerisationstemperatur von 52°C konstant bleibt. Im weiteren Verlauf der Polymerisation werden innerhalb von 3 h weitere 135 kg Vinylchlorid zudosiert. Die restliche Emulgatorlösung wird wie folgt während der Reaktionszeit verteilt:

| Zeit (h) | 1 | 2 | 3 | 4 |
|---|---|---|---|---|
| Emulgator (1) | 0,5 | 5,8 | 10,3 | 10,7 |

Der Emulgatorgehalt beträgt 1% (bezogen auf eingesetztes Vinylchlorid), der Feststoff 48%, der K-Wert 70 (K-Wert-Methode von Fikentscher: Lunge-Berl, 1934/5, Seite 945).

Die Aufarbeitung der Dispersion erfolgt in einer Sprühtrocknungsanlage. Die Eingangstemperatur der Trocknungsluft beträgt dabei 160°C, die Ausgangstemperatur 60°C. Ansonsten erfolgt die Aufarbeitung wie in der DE—AS 21 46 753 beschrieben.

Aus 100 Gewichtsteilen des so erhaltenen PVC-Pulvers und 60 Gewichtsteilen Di-2-ethylhexylphthalat (DOP) wird eine Paste hergestellt und deren Viskosität nach 2 Stunden Lagerung bei verschiedenen Schergeschwindigkeiten in einem Rotations-Viskosimeter (Gerät: Rheomat 30 der Firma Contraves AG, Zürich) gemessen. Der Tabelle 1 sind die Pastenviskositäten bei verschiedenen Schergeschwindigkeiten zu entnehmen.

Fur Prüfung der Verschäumungseigenschaften des Polyvinylchlorid-Schaumes wird eine Paste nach folgender Rezeptur hergestellt:

100 Teile Polyvinylchlorid

37 Teile Di-2-ethylhexylphthalat

20 Teile Benzylbutylphthalat

3 Teile Azodicarbonamid

1,5 Teile Cd/Zn-Stabilisator

## EP 0 090 142 B2

Die Paste wird 1 h im Vakuum entlüftet. Sie wird nach einer Lagerzeit von weiteren 24 h auf einem "Release-paper" mit einer Antragstärke von 1 mm verstrichen und unter Variation der Verweilzeit bei 220°C in einem Gelierkanal geliert und expandiert.

Beurteilt wird die Dichte, die Porenstruktur und die Oberflächengüte des PVC-Schaumes. Der Tabelle 2 ist das Prüfergebnis zu entnehmen.

### Beispiel 2

Man arbeitet wie in Beispiel 1, verwendet jedoch als Emulgator eine Mischung aus 4,3 kg einer wäßrigen Natriumalkylbenzolsulfonatlösung (Gemisch von $C_{10}$—$C_{13}$ Alkylbenzolsulfonaten) (21 Gewichtsprozent) und 1,3 kg einer wäßrigen Natrium-Salzlösung des Sulfobernsteinsäure-di-2-ethylhexyl-esters (70 Gewichtsprozent).

Der Emulgatorgehalt beträgt 1% (bezogen auf Vinylchlorid), der Feststoff 48,5% und der K-Wert 70,4.

Die Aufarbeitung der Dispersion erfolgt wie in Beispiel 1. Die Pastenviskositäten des Pulvers, angepastet im Verhältnis 100:60, sind der Tabelle 1 zu entnehmen. Die Verschäumungseigenschaften werden wie in Beispiel 1 geprüft und sind in Tabelle 2 aufgeführt.

### Beispiel 3

Man arbeitet wie in Beispiel 1, verwendet jedoch als Emulgator 3 kg eines $C_{12}$—$C_{18}$-Gemisches von Natrium-Alkylsulfonaten (60 gewichtsprozentige wäßrige Lösung).

Der Emulgatorgehalt beträgt 1% (bezogen auf Vinylchlorid), der Feststoff 49%, der K-Wert 70,7.

Die Aufarbeitung der Dispersion erfolgt wie in Beispiel 1. Die Pastenviskositäten des Pulvers, angepastet im Verhältnis 100:60, sind der Tabelle 1 zu entnehmen. Die Verschäumungseigenschaften werden wie in Beispiel 1 geprüft und sind in Tabelle 2 aufgeführt.

### Vergleichsversuch A

In einem Rührautoklaven, wie in Beispiel 1 beschrieben, werden 162 l Wasser, 8,6 kg einer 21%igen wäßrigen Natrium-alkyl-($C_{10}$—$C_{13}$)-benzolsulfonatlösung, 1,8 kg Stearylalkohol, 0,27 kg tert.-Butylperbenzoat und 0,54 g Kupfersulfat auf 65°C aufgeheizt und 30 min lang bei 120 UpM gerührt. Zu dieser Dispersion werden 180 kg Vinylchlorid gegeben. Anschließend wird die Rührerdrehzahl auf 10 UpM reduziert und die Reaktionsmischung auf 55°C abgekühlt. Durch Zudosieren einer wäßrigen Ascorbinsäurelösung wird die Reaktion gestartet und ausgesteuert.

Nach beendeter Reaktion beträgt der Feststoff der Dispersion 49,5% und K-Wert 69,0. Der Emulgatorgehalt beträgt 1% (bezogen auf Vinylchlorid). Die Aufarbeitung der Dispersion erfolgt wie in Beispiel 1. Die Pastenviskositäten des Pulvers, angepastet im Verhältnis 100:60, sind der Tabelle 1 zu entnehmen.

### Vergleichsversuch B

In einem Rührautoklaven, wie in Beispiel 1 beschrieben, wird zuerst eine Vormischung aus 170 l Wasser, 6 kg (30 gewichtsprozentige wäßrige Lösung). Natriumlaurylsulfat, 1,8 kg Stearylalkohol und 260 g Mononatriumphosphat bei 65°C 30 min unter Rühren homogenisiert. Das Gemisch wird auf 30°C gekühlt. Danach werden 180 kg Vinylchlorid und 400 g.

Kaliumpersulfat zugesetzt. Das Gemisch wird weitere 15 min gerührt und die Temperatur auf 54°C erhöht.

Der Polymerisationsansatz koaguliert und ist somit weder pumpbar noch mittels Sprühtrocknung aufzuarbeiten.

### Vergleichsversuch C

Man arbeitet wie in Vergleichsversuch E, jedoch mit den Ausnahmen, daß 248 l Wasser, 4,5 kg (30 gewichtsprozentige Lösung) Natrium-laurylsulfat und 4 kg Stearylalkohol eingesetzt werden.

Der Emulgatorgehalt beträgt 0,75% (bezogen auf Vinylchlorid), der Feststoff 28% und der K-Wert 70,1.

Die Aufarbeitung der Dispersion erfolgt wie in Beispiel 1.

Die Pastenviskositäten des Pulvers, angepastet im Verhältnis 100:60, sind der Tabelle 1 zu entnehmen.

### Vergleichsversuch D

Man arbeitet wie in Beispiel 1, setzt dem Emulgatoransatz jedoch keinen Fettalkohol zu.

Der Emulgatorgehalt beträgt 1% (bezogen auf Vinylchlorid), der Feststoff 50,1% und der K-Wert 69,3.

Die Aufarbeitung der Dispersion erfolgt wie in Beispiel 1. Die Pastenviskositäten des Pulvers, angepastet im Verhältnis 100:60, sind der Tabelle 1 zu entnehmen.

**Patentansprüche**

1. Verfahren zur Herstellung von verpastbaren Polymeren des Vinylchlorids oder Mischungen des Vinylchlorids mit bis zu 30 Gewichtsprozent copolymerisierbaren Monomeren durch diskontinuierliche Polymerisation in wäßriger Dispersion in Gegenwart wasserlöslicher Katalysatoren und eines Emulgatorsystems aus Emulgatoren und langkettigen Alkoholen, dadurch gekennzeichnet, daß eine Emulgatormischung, bestehend aus

a) Alkalimetall- oder Ammoniumsalzen von Alkylsulfonsäuren mit 10 bis 20 Kohlenstoffatomen im Alkylrest, von Alkylarylsulfonsäuren mit 8 bis 18 Kohlenstoffatomen im Alkylrest oder von Sulfonbernsteinsäureestern mit 6 bis 14 Kohlenstoffatomen im Alkoholteil in Mengen von 0,2 bis 3 Gewichtsprozent, bezogen auf das Monomere, und

b) 50 bis 200 Gewichtsprozent, bezogen auf das eingesetzte Tensid (a), eines $C_{14}$—$C_{20}$-Alkylalkohols absatzweise oder kontinuierlich dem Polymerisationsansatz während der Polymerisationsperiode zugegeben wird.

2. Verfahren nach Anspruch 1, dadurch gekennzeichnet, daß die Oberflächenspannung der Polymerisatdispersion während der Polymerisation in engen Grenzen gehalten wird.

3. Verfahren nach den Ansprüchen 1 und 2, dadurch gekennzeichnet, daß die Tensidmenge 0,5 bis 1,5 Gewichtsprozent, bezogen auf das eingesetzte Monomere, beträgt.

4. Verfahren nach den Ansprüchen 1 bis 3, dadurch gekennzeichnet, daß die Menge des $C_{14}$—$C_{20}$-Alkylalkohols 70 bis 150 Gewichtsprozent, bezogen auf das eingesetzte Tensid, beträgt.

**Revendications**

1. Procédé pour la préparation de polymères, transformables en pâte, à base de chlorure de vinyle ou de mélanges de chlorure de vinyle renfermant jusqu'à 30% en poids de monomères copolymérisables, par polymérisation discontinue en dispersion aqueuse, en présence de catalyseurs hydrosolubles et d'un système émulsifiant formé d'émulsifiants et d'alcools à longue chaîne, caractérisé par le fait que pendant la période de polymérisation, on ajoute au mélange de polymérisation, de façon discontinue ou continue, un mélange émulsifiant constitué

a) par des sels de métal alcalin ou par des sels d'ammonium d'acides alkyl-sulfoniques contenant de 10 à 20 atomes de carbone dans le radical alkyle, d'acides alkyl-arène-sulfoniques contenant de 8 à 18 atomes de carbone dans le radical alkyle ou d'esters de l'acide sulfosuccinique contenant de 6 à 14 atomes de carbone dans le fragment alcoolique, à raison de 0,2 à 3% en poids, relativement au monomère, et

b) par 50 à 200% en poids, relativement au surfactif utilisé a, d'un alcool alkylique en $C_{14}$ à $C_{20}$.

2. Procédé selon la revendication 1, caractérisé par le fait que, pendant la polymérisation, on maintient dans d'étroites limites la tension superficielle de la dispersion du produit de polymérisation.

3. Procédé selon les revendications 1 et 2, caractérisé par le fait que la quantité de surfactif est de 0,5 à 1,5% en poids, relativement au monomère utilisé.

4. Procédé selon les revendications 1 à 3, caractérisé par le fait que la quantité d'alcool alkylique en $C_{14}$ à $C_{20}$ est de 70 à 150% en poids, relativement au surfactif utilisé.

**Claims**

1. A process for the production of a paste-forming polymer of vinyl chloride or of a mixture of vinyl chloride with up to 30% by weight of a copolymerisable monomer by discontinuous polymerisation in aqueous dispersion in the presence of a water-soluble catalyst and an emulsifier system of an emulsifier and a long-chain alcohol, characterised in that there is added intermittently or continuously to the polymerisation charge during the polymerisation period an emulsifier mixture comprising

a) an alkali metal or ammonium salt of an alkylsulphonic acid of 10 to 20 carbon atoms in the alkyl radical, or of an alkylarylsulphonic acid of 8 to 18 carbon atoms in the alkyl radical, or of a sulphosuccinic acid ester of 6 to 14 carbon atoms in the alcohol moiety, surfactant component a) being added in an amount of 0.2 to 3% by weight, based on the monomer(s), and

b) 50 to 200% by weight, based on the added surfactant (a), of a $C_{14}$—$C_{20}$ alkyl alcohol.

2. A process according to claim 1, characterised in that the surface tension of the polymer dispersion is maintained within narrow limits throughout the polymerisation.

3. A process according to claim 1 or 2, characterised in that the amount of the surfactant is 0.5 to 1.5% by weight, based on the monomer(s) charged.

4. A process according to any of claims 1 to 3, characterised in that the amount of the $C_{14}$—$C_{20}$ alkyl alcohol is 70 to 150% by weight, based on the surfactant charged.

Tabelle 1

| Beispiel | Pastenviskosität (PVC/DOP-Verhältnis 100 : 60) in dPas bei Schergeschwindigkeit D in $s^{-1}$ | | | | |
|---|---|---|---|---|---|
| | D = 0,3 | D = 1 | D = 10 | D = 100 | D = 300 |
| 1 | 56 | 48 | 42 | 40 | 40 |
| 2 | 72 | 55 | 44 | 41 | 38 |
| 3 | 68 | 50 | 45 | 42 | 44 |
| Vergleichs-versuch | | | | | |
| A | 85 | 52 | 36 | 45 | 72 |
| B | - | - | - | - | - |
| C | 480 | 240 | 77 | 46 | 48 |
| D | 650 | 330 | 110 | 65 | 65 |

**Tabelle 2**

| Beispiel | Verschäumungseigenschaften | | | | |
|---|---|---|---|---|---|
| | Dichte $[g/cm^3]$ nach Verweilzeit $[min]$ | | | Beurteilung der Porenstruktur[+] | Beurteilung der Schaumstoffoberfläche[+] |
| | 1,5 | 2 | 2,5 | | |
| 1 | 0,22 | 0,19 | 0,18 | feinporig | glatt |
| 2 | 0,23 | 0,19 | 0,18 | feinporig | glatt |
| 3 | 0,22 | 0,20 | 0,20 | feinporig | glatt |

[+] beurteilt nach einer Verweilzeit von 2 min

EP 0 090 142 B2